# EUROPEAN PATENT SPECIFICATION

(11) **EP 0 915 735 B1**
(45) Date of publication and mention of the grant of the patent: **08.03.2000**
(21) Application number: 97940073.6
(22) Date of filing: 05.08.1997
(51) Int. Cl.: B01J 35/04, C01B 3/38, B01J 23/40

(54) **CATALYST SUPPORT AND PROCESS USING THE SAME**
KATALYSATORTRÄGER UND VERFAHREN UNTER VERWENDUNG DESSELBEN
SUPPORT DE CATALYSEUR ET PROCEDE UTILISANT CE DERNIER

(30) Priority: 05.08.1996 EP 96202197
(43) Date of publication of application: 19.05.1999
(73) Proprietor: SHELL INTERNATIONALE RESEARCH MAATSCHAPPIJ B.V., 2596 HR Den Haag (NL)
(72) Inventor: VAN DAM, Reinier, Johannes, Maria, NL-1031 CM Amsterdam (NL); VAN LOON, Petrus, Josephus, Maria, NL-1031 CM Amsterdam (NL)
(74) Representative: Zeestraten, Albertus Wilhelmus Joannes
(86) International application number: EP9704403
(87) International publication number: WO9805423

(56) References cited:
- EP-A- 0 629 578
- EP-A- 0 640 561
- US-A- 3 887 741
- US-A- 5 079 210

## Description

The present invention relates to a catalyst support and a process using the same, in particular to a catalyst support comprising a porous monolithic structure adapted to be engaged by a mounting and a process for the catalytic conversion of a fluid substrate at elevated space velocity, temperature and pressure using the catalyst support, more particularly to a process for the catalytic partial oxidation of hydrocarbon feedstock.

Catalytic conversion processes employing monolithic catalysts or catalyst support structures for the conversion of gaseous or liquid fluid substrate in axial flow require a means for the mounting of the catalyst or catalyst support within the stream of substrate flow. Typically such manner of mounting should not interfere with or have a deleterious effect on the process.

For the operation of processes at elevated space velocity, temperature and pressure, and particularly with a pressure differential experienced across the catalyst or catalyst support, these requirements become more complex. It will be apparent that a manner of mounting must be devised which is able to withstand a high pressure differential, does not rely on temperature sensitive components and which does not cause undesired deviation of substrate flow or the like.

The specification of European patent application publication No. 0 656 317 (EP-A-0 656 317) contains a description of a process for the catalytic partial oxidation of a hydrocarbon feedstock in which the hydrocarbon is mixed with an oxygen-containing gas and contacted with a catalyst. The catalyst is retained in a fixed arrangement having a high tortuosity (defined as the ratio of the length of the path followed by a gas flowing through the structure to the length of the shortest possible straight line path through the structure) of at least 1.1 and having at least 750 pores per square centimetre. The catalyst preferably comprises a catalytically active metal supported on a carrier. Suitable carrier materials are described as including the refractory oxides, such as silica, alumina, titania, zirconia and mixtures thereof. A catalyst comprising a zirconia refractory foam as carrier is specifically exemplified.

An attractive catalytic partial oxidation process for application on a commercial scale would operate at elevated pressures, typically in excess of 10 bar, for example at around 30 bar, and at high gas hourly space velocities (normal litres of gas per kilogram of catalyst per hour), typically of the order of 20,000 to 100,000,000 Nl/kg/hr. Due to the thermodynamic behaviour of the partial oxidation reaction, in order to obtain a high yield of carbon monoxide and hydrogen at elevated pressures, it is necessary to operate the reaction at elevated temperatures. Temperatures of the order of 1000 °C or higher are necessary for obtaining the yields demanded of a commercial process.

Moreover, the specification of International patent application publication WO96/04200 describes the thermal shock to which refractory monolithic structures are subjected under the conditions of elevated temperature of such processes, the shock sustained when the catalyst is subjected to a rapid change in temperature giving rise to substantial temperature gradients across the structure, and teaches the use of monolithic structures comprising a zirconia-based material which provides a high thermal shock resistance.

The operation of these processes is not narrowly critical in terms of control of operating conditions and of catalyst and feedstock contacting, in order to substantially prevent reduced conversion to desired products due to insufficient or excess oxidation.

There is a need therefore for a means for mounting a catalyst support for use in such processes in a manner sufficient to withstand conditions of elevated space velocity, temperature and thermal shock and moreover without substantially influencing or disrupting the course of the reaction.

We have now surprisingly found that a catalyst support comprising a mounting having a specific shape adapted for engaging a porous monolithic structure and oriented in specific manner within a substrate or reactant fluid flow stream is able to make use of the fluid space velocity in order to provide sealing engagement of the monolithic structure, moreover, without substantially interfering with the process.

Accordingly, in its broadest aspect, the invention relates to a catalyst support comprising (1) a mounting having a fluid inlet opening, a fluid outlet opening and an engaging surface adapted to engage a porous monolithic structure and (2) a porous monolithic structure having a first upstream end, a second downstream end and an engaging surface to engage the mounting, and to provide substantially fluid-tight sealing engagement thereof by means of a sealing force applied to the monolithic structure at its upstream end, thereby generating a sealing pressure in excess of and substantially substantially proportional to a pressure differential between the upstream and downstream ends thereof. Preferably the sealing force comprises fluid flow pressure of a stream of reaction component(s) or substrate(s). Reference herein to fluid is to a gaseous or liquid fluid preferably a gaseous fluid or combination thereof. Reference herein to an axial stream-directed force is to such force or to equivalent component in axial stream-direction of an in-stream force. Reference herein to fluid-tight sealing engagement is to sealing engagement in manner that substantially no fluid is able to pass through the mounting other than via the inlet or outlet opening thereof, for example may be provided in the form of a fluid-tight layer comprising an engaging surface of the mounting or monolithic structure or associated therewith or therebetween.

Suitably the inlet opening and outlet opening of the mounting are aligned with the upstream and downstream end respectively of the monolithic structure.

The catalyst support of the invention provides in admirable manner a means for mounting the monolithic structure with sealing engagement thereof as long as the sealing pressure is greater than the pressure differential between the upstream and downstream ends thereof.

This has the added advantage that the pressure of fluid substrate flow to the upstream end of the monolithic structure serves to retain the structure within the mounting.

In a preferred aspect of the invention the monolithic structure comprises a truncated solid cone and the mounting comprises a truncated hollow open-ended cone characterised in that the structure and mounting are defined by essentially the same cone half angle and by substantially the same cone shape whereby the mounting is adapted to engage the monolithic structure such that both cone surfaces are in sealing engagement, preferably the monolithic structure and mounting may comprise any curved or polygonal cone shape or a combination thereof.

Accordingly the integrity of sealing engagement of the monolithic structure and mounting is not affected by displacement in downstream direction of the monolithic structure as a result of the sealing force applied, but on the contrary is thereby enhanced.

The catalyst support may be employed in any desired orientation, for example in vertical or horizontal substrate flow. The catalyst support may also have any dimensions as hereinbefore defined, in particular may be of any magnitude, the sealing mechanism being essentially scale independent, rather being a function of the operating window to be employed and the pressure differential to be created between the upstream and downstream ends of the monolithic structure.

It will be apparent that downstream end, for example comprising the plane of truncation, and indeed the upstream end of the monolithic structure may be configured to provide any desired property such as substrate flow control, bulk strength of monolithic structure, catalyst/substrate interface angle or the like. Preferably the downstream end, is right, angled or curved co-planar with the upstream end. Optionally the monolithic structure extends at the plane of truncation downstream thereof in conventional manner, whereby the plane of truncation serves to define the downstream end of the engaging surface thereof. For example, the monolithic structure may comprise a curved or angled profile cylindrical extension. Suitably any such extension allows for sealing force induced displacement in downstream direction as hereinbefore defined. Such extension may be associated with a corresponding mounting extension in suitable manner.

The monolithic structure and the mounting may comprise substantially discrete or continuous rotation symmetric truncated cones defined by rotation about a central longitudinal axis of a straight line arranged at an angle thereto, wherein the mounting and the structure are defined by the rotation of at least in part the same portion of the straight line about the central longitudinal axis, preferably discrete rotation is defined by at least six rotation symmetric positions about the central longitudinal axis. In this case it is preferred that the monolithic structure is defined by the discrete or continuous rotation about the central longitudinal axis of the straight line and of two lines connecting the straight line to the central longitudinal axis, wherein the two connecting lines are straight, angled, curved or a combination thereof. It will be apparent that a discrete rotation symmetric catalyst support, i.e. comprising polygonal structure and mounting cone surfaces may approximate to a continuous rotation symmetric cone surface in instances where a process is to be operated with cylindrical fluid substrate flow pattern. For example, a hex-, hept-, octagonal etc. structure or the like may be suitable for this purpose.

It will be appreciated, as hereinbefore defined, that the monolithic structure of the invention is retained within the mounting in a manner such that the application of a fluid substrate pressure is sufficient to ensure engagement of respective surfaces, such as hereinbefore mentioned cone surfaces. The particular advantage of this invention is that the sealing engagement of the cone surfaces for example is a function of the pressure differential applied across the monolithic structure with any given cone half angle, height to diameter ratio, porosity of the structure or the like. Accordingly by appropriate selection of these parameters it is possible to ensure that a desired sealing communication of the cone surfaces is achieved for any given space velocity which is applied.

Suitably the monolithic structure and mounting are defined by a cone half angle in the range of 3° to 20° to the axis, preferably in the range of 4° to 18°, more preferably in the range of 5° to 15°, for example in the range of 6° to 10°.

For a cone half angle in the range of 3° to 20° to the axis, selected for given values of the other parameters as mentioned, it is possible to ensure that the sealing pressure cannot become excessive to the extent that the monolithic structure sustains damage, is crushed or distorted, but nevertheless the cone half angle is sufficient to ensure that the structure is retained in the mounting and cannot be axially disengaged downstream thereof.

Reference herein to the cone half angle is to the angle defined by the cone central longitudinal axis and any "generator"; i.e. line contained in the cone surface thereof.

Suitably the mounting and monolithic structure are defined by the same or different ratio of average axial length to average width in the range of from 1:10 to 1:1.1, preferably 1:8 to 1:1.5, more preferably from 1:5 to 1:2. The relative and particular dimensions may for example depend on the nature of the reaction and the mechanical strength of the monolithic structure and/or mounting.

The catalyst support may comprise additional engaging means, suitably comprising one or more relief features provided on the mounting and/or monolithic structure. Such features suitably provide a supplementary sealing force which prevents disengagement in the event of a reverse pressure differential across the monolithic support or other disruption of the sealing force.

Preferably one or more relief features are circumferentially arranged with respect to the monolithic structure and mounting, for example comprising an annular projecting band which is integral with the monolithic structure or mounting or separate therefrom and adapted to associate with a corresponding annular recessed feature comprised in one or both of the monolithic structure and mounting engaging surfaces.

Relief features as hereinbefore defined may for example comprise a cord secured about the monolithic structure or mounting, adapted to be in association with an annular recess in one or both engaging surfaces. For example an engaging surface having an annular rim, recess or projection thereabout may be adapted to contain or abut the cord. The use of a flexible or resiliently deformable cord material, e.g. woven cord, has the advantage that sealing engagement and pressure may self-regulate as hereinbefore defined.

Preferably a cord or the like is secured in place by suitable means for example stitching with a yarn of similar material or by means of a clip, pin, staple or the like constructed of any suitable heat resistant material such as an alloy or the like.

Suitably sealing or gasket means are provided comprising flexible or resiliently deformable material adapted to interface between the respective engaging surfaces. This may be provided in the form of one or more continuous sheets, preferably woven structures of inorganic fibres, fragments or the like distributed about the entire engaging surfaces or a portion thereof. Advantageously such sealing or gasket means may be used to enhance the range of effective sealing engagement, moreover to account for any irregularities in the surfaces to ensure that they do accurately engage despite any difference in cone half angle resultant from manufacture of the component cones, or a high degree of self-adjusting displacement of the monolithic structure with respect to the mounting each having a small cone half angle or the like. The sealing or gasket means is suitably arranged integral with or separate from one or both engaging surfaces in a manner to allow such self-regulating displacement of the surfaces without damage to the sealing or gasket means.

That catalyst support is suitably associated with means for securing the mounting in a catalytic reactor. It will be appreciated that the mounting may have any external shape remote from the engaging surface whereby it may be secured in suitable manner in the catalytic reactor. Since the mounting is essentially fluid-tight, the external shape thereof will not substantially affect or influence the substrate flow within the reactor, and indeed may be designed in manner so as not to influence the local temperature at any point within the monolithic structure or the reactor.

The component parts of the catalyst support, specifically the monolithic structure, mounting, additional engaging means and sealing or gasket means suitably may comprise an inorganic material of high temperature resistance, selected from compounds of elements of Groups IIa, IIIa, IVa, IIIb, IVb and the lanthanide group of the Periodic Table of the Elements, and combinations thereof, preferably selected from oxides, carbides, nitrides or the like of zirconia, lanthana, alumina and combinations thereof with any of the hereinbefore defined compounds.

The monolithic structure may comprise any structure as hereinbefore defined across which a pressure differential may be created. Preferably the monolithic structure as hereinbefore defined comprises channels extending through the structure, defined by a high tortuosity, preferably a tortuosity of greater than 1.1, more preferably in the range of from 1.1 to about 10.0, more preferably the monolithic structure is in the form of a foam.

Suitably, and as hereinbefore defined, the pressure differential across the monolithic structure, between the upstream and downstream ends thereof is less than the sealing pressure created between the engaging surfaces of the structure and mounting, preferably the ratio of the pressure differential to the sealing pressure is less than 1, preferably is in the range of 1:1.2 to 1:10, more preferably 1:1.5 to 1:8, for example 1:3 to 1:6.

Suitably the structure comprises one or more monolithic portions, for example it is possible according to the present invention to provide a plurality of portions which are engaged within a single mounting as hereinbefore defined, for example in the form of conical disc sections making up a truncated cone as hereinbefore defined. This has the advantage of enhanced thermal shock resistance by virtue of reduced length of temperature gradient in any given monolith section.

Preferably the mounting comprises additional materials providing the required mechanical strength, thermal shock resistance and the like, more preferably comprises fibre reinforcement, preferably comprises a continuous inorganic fibre reinforced inorganic matrix.

The catalyst support may comprise any catalyst suited for conversion of fluid substrate under the above mentioned operating conditions. Suitably catalyst is introduced by known means, for example impregnated or the like in known manner, for example with uniform, or gradient distribution or the like.

From the foregoing it will be apparent that the catalyst support of the invention is admirably suited for use in processes as hereinbefore mentioned in manner to address the object of the invention. In particular it will be apparent that the catalyst support enables operation of such processes without substantial interference or disruption thereof.

Accordingly there is provided in a further aspect of the invention a process for the catalytic conversion of fluid substrate comprising contacting the substrate at elevated gas hourly space velocity and at elevated temperature with a catalyst comprising a catalytically active material supported on a porous monolithic structure as hereinbefore defined, wherein the monolithic structure is adapted to be sealingly engaged by a mounting as hereinbefore defined by means of a sealing force applied to the monolithic structure at the upstream end thereof as hereinbefore defined, preferably the sealing force comprises pressure of fluid flow.

By means of the process of the invention the catalyst support is secured by means of the very process features which would be problematic in operation using standard catalyst mountings, specifically by making use of the features of elevated space velocity, temperature and pressure. This ensures an admirable compatibility of the catalyst support when employed in the process of the invention.

In particular it has been found that excellent sealing of the monolithic structure may be obtained by means of selecting the dimensions and properties of a catalyst support as hereinbefore defined, with reference to the process operating conditions to be employed, whereby a certain range of ratio of pressure differential across the monolithic structure to sealing pressure may be maintained as hereinbefore defined. It will be appreciated that the choice of monolithic structure and of pressure ratio will be determined by the severity of the process conditions and the acceptable degree of sealing. In some processes it is essential that substantially 100% conversion takes place, i.e. no fluid substrate or intermediate is able to circumvent the catalyst support or a part thereof, this may be less critical in other instances. Moreover the degree of sealing may ensure that substrate flow patterns remain linear along the axis of the reactor in instances that leakage about the catalyst support would cause flow deviations affecting the course of the reaction.

Preferably the process of the invention is a process for the catalytic partial oxidation of hydrocarbon feedstock which comprises contacting a feed comprising a hydrocarbon feedstock and an oxygen-containing gas with a catalyst supported on a catalyst support as hereinbefore defined at a temperature in the range of 590 to 1400 °C, preferably 750-1400 °C, more preferably 850 to 1300 °C, especially 1000-1300 °C and at a gas hourly space velocity in the range of 20,000 to 100,000,000 Nl/kg/hr, especially 50,000-50,000,000. The preferred process is suitably used to prepare a mixture of carbon monoxide and hydrogen in desired ratio from any hydrocarbon feedstock. This process is a means to obtain very useful products known in the art as synthesis gas by means of a highly exothermic reaction, by which the molar ratio of carbon monoxide to hydrogen in the products may be controlled by means of choice of feedstock and operating conditions to give a desired molar ratio of carbon monoxide to hydrogen in the products.

The hydrocarbon is in the gaseous phase when contacting the catalyst. The process is particularly suitable for the partial oxidation of methane, natural gas, associated gas or other sources of light hydrocarbons. In this respect, the term "light hydrocarbons" is a reference to hydrocarbons having from 1 to 5 carbon atoms. The process may be advantageously applied in the conversion of gas from naturally occurring reserves of methane which contain substantial amounts of carbon dioxide. The feed preferably comprises methane in an amount of at least 50% by volume, more preferably at least 70% by volume, especially at least 80% by volume.

The hydrocarbon feedstock is contacted with the catalyst as a mixture with an oxygen-containing gas. Air is suitable for use as the oxygen-containing gas. However, the use of substantially pure oxygen as the oxygen-containing gas may be preferred. In this way, the need for handling a large volume of inert gas, for example nitrogen when using air as the oxygen-containing gas, is avoided. The feed may optionally comprise steam.

The hydrocarbon feedstock and the oxygen-containing gas are preferably present in the feed in such amounts as to give an oxygen-to-carbon ratio in the range of from 0.3 to 0.8, more preferably, in the range of from 0.45 to 0.75. References herein to the oxygen-to-carbon ratio refer to the ratio of oxygen in the from of molecules (O2) to carbon atoms present in the hydrocarbon feedstock. Preferably, the oxygen-to-carbon ratio is in the range of from 0.45 to 0.65, with oxygen-to-carbon ratios in the region of the stoichiometric ratio of 0.5, that is ratios in the range of from 0.45 to 0.65, being especially preferred. If steam is present in the feed, the steam-to-carbon ratio is preferably in the range of from above 0.0 to 3.0, more preferably from 0.0 to 2.0. The hydrocarbon feedstock, the oxygen-containing gas and steam, if present, are preferably well mixed prior to being contacted with the catalyst.

The process of the present invention may be operated at any suitable pressure. For applications on a commercial scale, elevated pressures, that is pressures significantly above atmospheric pressure are most suitably applied. The process may be operated at pressures in the range of up to 150 bara. Preferably, the process is operated at pressures in the range of from 2 to 125 bara, especially from 5 to 100 bara.

The process may be operated at any suitable temperature. Under the preferred conditions of high pressure prevailing in processes operated on a commercial scale, the feed is preferably contacted with the catalyst at high temperatures. This is necessary if high levels of conversion are to be achieved at the preferred elevated pressures. Accordingly, the feed mixture is preferably contacted with the catalyst at a temperature in excess of 950 °C, more preferably at a temperature in the range of from 750 to 1400 °C, especially from 1000 to 1300 °C. The feed mixture is preferably preheated prior to contacting the catalyst.

The feed may be provided during the operation of the process at any suitable space velocity. It is an advantage of the process of the present invention that very high gas space velocities can be achieved. Thus, gas space velocities for the process (expressed in normal litres of gas per kilogram of catalyst per hour) are in the range of from 20,000 to 100,000,000 Nl/kg/hr, more preferably in the range of from 50,000 to 50,000,000 Nl/kg/hr. Space velocities in the range of from 500,000 to 30,000,000 Nl/kg/hr are particularly suitable for use in the process.

The catalyst employed in the process of the present invention comprises a catalytically active metal supported on a monolithic structure as hereinbefore defined. Catalytically active metals for inclusion in the catalyst are selected from Group VIII of the Periodic Table of the Elements. References herein to the Periodic Table are to the CAS version, as published in the CRC Handbook of Chemistry and Physics, 68th Edition. Preferred catalysts for use in the process of the present invention comprise a metal selected from ruthenium, rhodium, palladium, osmium, iridium and platinum. Catalysts comprising ruthenium, rhodium or iridium as the catalytically active metal are particularly preferred. Iridium is a most suitable catalytically active metal.

The catalyst comprises the catalytically active metal supported on an inorganic, preferably zirconia-based, monolithic structure as hereinbefore defined. Any suitable zirconia-based material may be employed. Suitable zirconia materials are available commercially. The material preferably comprises at least 70% by weight zirconia, for example selected from known forms of (partially) stabilised zirconia or substantially pure zirconia. (Partially) stabilised zirconia comprising oxides of one or more of the rare earth, Group IIIB or Group IIA elements of the Periodic Table are particularly preferred zirconia-based materials. Most preferred zirconia-based materials comprise zirconia stabilised or partially stabilised by one or more oxides of Mg, Ca, Al, Y, La or Ce. The stabilised or partially stabilised zirconia may be in any commercially available form, such as a composite based on particles, fibres or whiskers.

The monolithic structure may comprise inorganic material as above described coated with a further material having a desirable property rendering enhanced thermal shock resistance (for example SiC, SiO2, Al2O3 or a mixture thereof), enhanced catalyst stability or enhanced thermal stability.

The monolithic structure which may be of the order of 1 cm to 1 m or more in largest dimension, may comprise one or a plurality of individual monolithic portions. Whilst a plurality of portions provides greater thermal shock resistance than a similar single portion, supporting and obtaining a good interface of the portions can be problematic with the high space velocities employed in the present invention. Nevertheless the structure may comprise a sectioned monolithic structure according to known techniques and as hereinbefore defined. The porous monolithic structure may have any suitable form. One form of monolithic structure is that of an extruded honeycomb, suitable materials of which are known in the art and available commercially. The extruded honeycomb materials are characterised by having a plurality of straight, elongate, parallel channels extending through the structure. However, preferred monolithic structures are those having a high tortuosity. The term "tortuosity" is a common term in the art which, as used herein, is defined as the ratio of the length of the path followed by a gas flowing through the structure to the length of the shortest possible straight line path through the structure. Thus, it follows that the extruded honeycomb structures have a tortuosity of 1.0. The monolithic structure employed in the process of the present invention preferably has high tortuosity, that is a tortuosity of greater than 1.1. The monolithic structure preferably has a tortuosity in the range of from 1.1 to about 10.0, more preferably in the range of from 1.1 to about 5.0. A most suitable range of tortuosity for the monolithic structure is from 1.3 to 4.0.

The monolithic structure employed in the process of this invention is porous, as hereinbefore defined. The monolithic structure is preferably of high porosity. These pores are to be distinguished from the micropores which may be present in the carrier material. The monolithic structure preferably contains at least 500 pores per square centimetre, more preferably at least 750 pores per square centimetre. Preferred monolithic structures are those having from 1000 to 15000 pores per square centimetre, more preferably from 1250 to 10000 pores per square centimetre.

The monolithic structure preferably has a void fraction in the range of from 0.4 to 0.9, more preferably for the avoidance of excessive pressure-drop from 0.6 to 0.9.

A most suitable and especially preferred monolithic structure for the catalyst carrier employed in the process of the present invention is a foam. Suitable foams for use in the process of this invention are available commercially.

The catalyst employed in the process of the present invention may be prepared by processes known in the art. A most suitable process is the impregnation of the inorganic material with a compound of the catalytically active metal.

The feed is preferably contacted with the catalyst under adiabatic conditions. For the purposes of this specification, the term "adiabatic" is a reference to reaction conditions under which substantially all heat loss and radiation from the reaction zone is prevented, with the exception of heat leaving in the gaseous effluent stream of the reactor.

In a further aspect, the present invention relates to carbon monoxide or hydrogen whenever prepared by a process as hereinbefore described.

The carbon monoxide and hydrogen produced by the process of this invention may be used in any process employing either one or both of these compounds. The mixture of carbon monoxide and hydrogen prepared by the process is particularly suitable for use in the synthesis of hydrocarbons, for example by means of the Fischer-Tropsch process, or for the synthesis of oxygenates, for example methanol. Processes for the conversion of carbon monoxide and hydrogen into such products are well known in the art. Alternatively, the carbon monoxide and hydrogen product may be used in the manufacture of hydrogen by the water gas shift reaction. Other applications for the products include hydroformylation and carbonylation processes.

The invention is now illustrated in non limiting manner with reference to Figures 1 to 5 wherein

Figures 1 to 3 are each a cross-section through the catalyst support of the invention in the plane of the central longitudinal axis thereof.

Figures 4 and 5 are plan views of any of the supports of Figures 1 to 3.

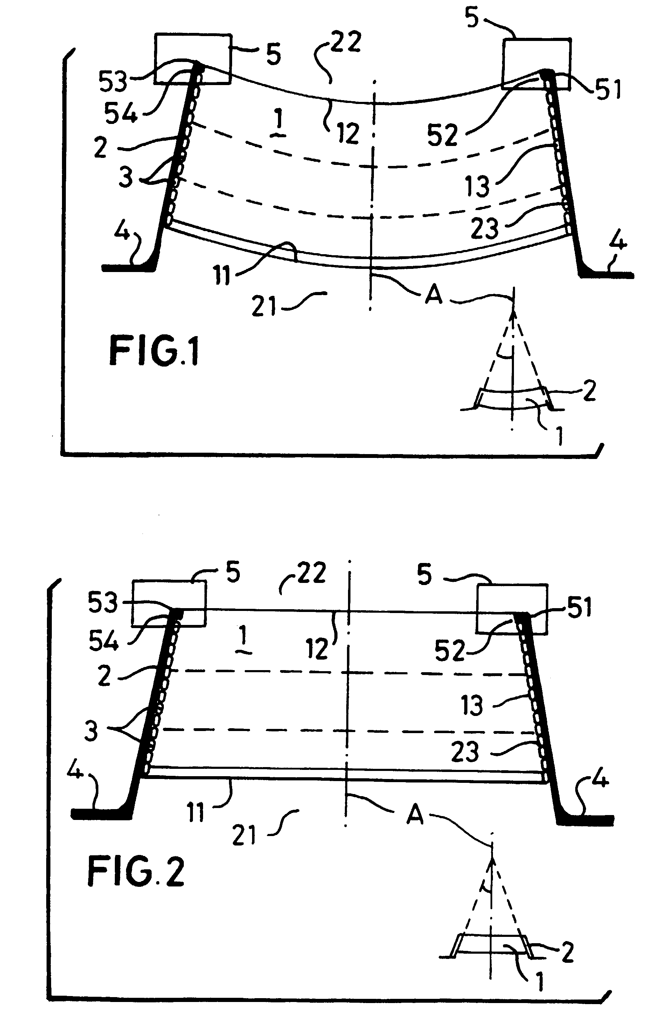

In Figure 1 is shown a catalyst support of the invention comprising a monolithic structure (1) having an upstream end (11), a downstream end (12) and an engaging surface (13), and a mounting (2) having an inlet opening (21), an outlet opening (22) and an engaging surface (23). The mounting, is constructed of relatively thermally shock resistant material, for example inorganic fibre-reinforced inorganic matrix which is essentially fluid-tight. The monolithic structure (1) comprises an inorganic foam as hereinbefore defined having tortuous channels therethrough as hereinbefore defined. A gasket (3) is provided about the monolithic structure (1) and between the engaging surfaces (13) and (23). The cone half angle is illustrated with central longitudinal axis A in the inset, selected from ranges as hereinbefore defined. In the Figure the monolithic structure (1) is a curved-coplanar truncated cone optionally comprising multiple monolithic sections (illustrated by dotted line). The mounting (2) is in turn adapted to be mounted in the flow stream of a reactor by means of suitable attachments, for example by means of a flange extension at the base (4) or the truncated top (not shown) of the mounting (2), which flange is adapted to be secured in a suitable aperture or opening (not shown), for example between opposing blocks mounted on the reactor wall. Reactor wall mountings may be constructed of any suitable material, preferably any thermally stable material, for example quartz, carbon, alloys or the like. Optionally an insulating material is provided between the flange (4) and a metal reactor wall mounting.

It is desirable that the mounting (2) is of minimal wall thickness, but sufficient to withstand the conditions to be applied. This ensures minimal thermal shock effects and other interference with the process. The axial length of the monolithic structure (1) is slightly less than or the same as the axial length of the mounting (2).

The catalyst support (1) has additional engaging means comprising relief features (5) for example a non integral woven cord (Nextel TM) (51) engages recess (52), annular projection (53) and/or conical rim (54).

A cord (51) is overlocked in manner to enable clipping or stitching as hereinbefore defined, without affecting the sealing association of the cone surfaces (13) and (23).

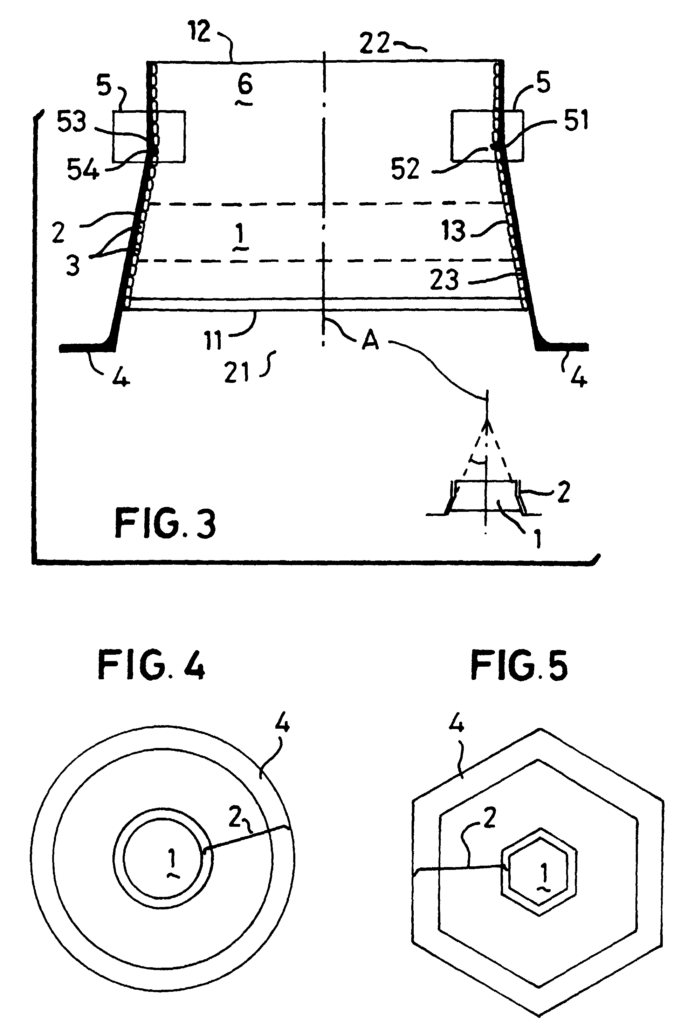

In Figures 2 and 3 are shown alternative embodiments of the catalyst support of Figure 1, being right-coplanar truncated cones, in Figure 3 comprising a downstream extension (6). In Figures 4 and 5 are shown catalyst supports comprising respective continuous and discrete rotation symmetric, or curved and polygonal cone structures (1).

The invention is now described in terms of the process embodiment with reference, in non limiting manner, to the following example.

### Example 1

A commercially available porous monolithic structure as shown in Figure 1 comprising an inorganic foam having tortuous channels and impregnated with active catalyst by conventional impregnation techniques has a desired final catalyst loading.

The impregnated monolithic structure is engaged within a mounting, as illustrated in Figure 1, in a steel reactor. Natural gas and oxygen are thoroughly mixed and the resulting mixture used as feed and introduced into the reactor to contact the catalyst, at a desired oxygen-to-carbon ratio. The feed is supplied at a predetermined gas hourly space velocity temperature generating flow pressure at the upstream end (11) of the monolithic structure (1).

The operating temperature of the catalyst support of the order of 1200 °C is measured by optical pyrometry. The composition of the gas leaving the reactor is measured by gas chromatography. The conversion and selectivity of the process to carbon monoxide and hydrogen (on the basis of methane converted) is determined.

The pressure differential determined across the monolithic structure is of the order of 2.5 bara. The catalyst mounting is found to give excellent sealing engagement of the monolithic structure, without detectable interference with the process in terms of conversion and selectivity.

Accordingly, it will be apparent that the catalyst support of the invention may be employed in admirable manner in the process of the invention as hereinbefore defined.

## Claims

1. A catalyst support comprising a mounting having a fluid inlet opening, a fluid outlet opening and an engaging surface adapted to engage a porous monolithic structure, and a porous monolithic structure having a first upstream end, a second downstream end and an engaging surface, and to provide substantially fluid-tight sealing engagement thereof by means of a sealing force applied to the monolithic structure at its upstream end, thereby generating a pressure in excess of and substantially proportional to a pressure differential between the upstream and downstream ends thereof, preferably the sealing force comprises fluid flow pressure of a stream of reaction component(s) or substrate(s).

2. A catalyst support according to claim 1 wherein the monolithic structure comprises a truncated solid cone and the mounting comprises a truncated hollow open-ended cone characterised in that the structure and mounting are defined by essentially the same cone half angle and by substantially the same cone shape whereby the mounting is adapted to engage the monolithic structure such that both cone surfaces are in sealing engagement, preferably the monolithic structure and mounting may comprise any curved or polygonal cone shape or a combination thereof.

3. A catalyst support according to claim 2 wherein the monolithic structure is defined by a right, angled, or curved plane of truncation, preferably co-planar with the upstream end thereof.

4. A catalyst support according to any of claims 2 and 3 wherein the monolithic structure and mounting are defined by a cone half angle in the range of 3° to 20° to the axis, preferably in the range of 4° to 18°, more preferably in the range of 5° to 15°, for example in the range of 6° to 10°.

5. A catalyst support according to any of claims 1 to 4 comprising additional engaging means in the form of one or more relief features provided on the mounting and/or monolithic structure.

6. A catalyst support according to any of claims 1 to 5 comprising sealing or gasket means arranged to interface between the respective engaging surfaces, which sealing or gasket means comprise flexible or resiliently deformable material or the like.

7. A catalyst support according to any of claims 1 to 6 wherein any of the monolithic structure, mounting, additional engaging means and sealing or gasket means comprise an inorganic material of high temperature resistance, selected from compounds of elements of Groups IIa, IIIa, IVa, IIIb, IVb and the lanthanide group of the Periodic Table of the Elements, and combinations thereof, preferably selected from oxides, carbides, nitrides or the like of zirconia, lanthana, alumina and combinations thereof with any of the hereinbefore defined compounds, and wherein the mounting comprises fibre reinforcement, preferably comprises a continuous inorganic fibre reinforced inorganic matrix as hereinbefore defined.

8. A process for the catalytic conversion of fluid substrate comprising contacting the substrate at elevated gas hourly space velocity and at elevated temperature with a catalyst comprising a catalytically active material supported on a porous monolithic structure as hereinbefore defined with reference to any of claims 1 to 7, wherein the monolithic structure is adapted to be sealingly engaged in substantially fluid-tight manner by a mounting as hereinbefore defined with reference to any of claims 1 to 7 by means of a sealing force applied to the monolithic structure at the upstream end thereof as hereinbefore defined with reference to any of claims 1 to 7, preferably the sealing force comprises pressure of fluid flow.

9. A process according to claim 8 which is a process for the catalytic partial oxidation of a hydrocarbon feedstock, which comprises contacting a feed comprising a hydrocarbon feedstock and an oxygen-containing gas with a catalyst supported on a catalyst support as hereinbefore defined at a temperature in the range of 750 to 1400 °C, preferably 850 to 1300 °C and at a gas hourly space velocity in the range of 20,000 to 100,000,000 Nl/kg/hr, and wherein the catalyst comprises, as catalytically active material, a metal selected from the elements of Group VIII of the Periodic Table of the Elements, preferably selected from rhodium, platinum, palladium, osmium, iridium and ruthenium.

10. A process according to claim 9 wherein the hydrocarbon feedstock comprises methane, natural gas, associated gas or a source of light hydrocarbon and the oxygen-containing gas is substantially pure oxygen, preferably wherein the hydrocarbon feedstock and the oxygen containing gas are present in amounts giving an oxygen to carbon ratio of from 0.3 to 0.8, preferably from 0.45 to 0.75.

## Patentansprüche

1. Katalysatorträger, der einen Rahmen mit einer Fluideinlaßöffnung, einer Fluidauslaßöffnung und einer zum Eingriff einer porösen monolithischen Struktur angepaßten Eingriffsfläche und eine poröse monolithische Struktur umfaßt, die ein erstes stromaufwärtiges Ende, ein zweites stromabwärtiges Ende und eine Eingriffsfläche umfaßt, um einen im wesentlichen fluiddichten Dichtungseingriff hievon mittels einer Abdichtungskraft zu schaffen, die an der Monolithstruktur an deren stromaufwärtigem Ende angreift, wodurch ein Abdichtungsdruck geschaffen wird, der größer als und im wesentlichen proportional zu einem Druckunterschied zwischen den stromaufwärtigen und stromabwärtigen Enden hievon ist, wobei die Abdichtungskraft vorzugsweise einen Fluidströmungsdruck eines Stroms von Reaktionskomponenten oder Substraten umfaßt.

2. Katalysatorträger nach Anspruch 1, worin die Monolithstruktur aus einem vollen Kegelstumpf besteht und der Rahmen aus einem hohlen Kegelstumpf mit offenen Enden besteht, dadurch gekennzeichent, daß die Struktur und der Rahmen durch im wesentlichen den gleichen Kegelhalbwinkel und durch im wesentlichen die gleiche Kegelform definiert sind, wobei der Rahmen derart zum Eingriff mit der Monolithstruktur angepaßt ist, daß beide Kegelmantelflächen in dichtendem Eingriff stehen, wobei vorzugsweise die Monolithstruktur und der Rahmen jede beliebige gekrümmte oder polygonale Kegelform oder eine Kombination hievon aufweisen können.

3. Katalysatorträger nach Anspruch 2, worin die Monolithstruktur durch eine gerade, gewinkelte oder gekrümmte Kegel stumpf ebene definiert ist, die vorzugsweise mit dem stromaufwärtigen Ende der Monolithstruktur co-planar ist.

4. Katalysatorträger nach einem der Ansprüche 2 und 3, worin die Monolithstruktur und der Rahmen durch einen Kegelhalbwinkel im Bereich von 3° bis 20° zur Achse, vorzugsweise im Bereich von 4° bis 18°, stärker bevorzugt im Bereich von 5° bis 15°, beispielsweise im Bereich von 6° bis 10° definiert sind.

5. Katalysatorträger nach einem der Ansprüche 1 bis 4, umfassend zusätzliche Eingriffsmittel in der Form eines oder mehrerer Reliefmerkmale, die am Rahmen und/oder an der Monolithstruktur ausgebildet sind.

6. Katalysatorträger nach einem der Ansprüche 1 bis 5, umfassend Dichtungs- oder Abdichtmittel, die als Zwischenlage zwischen den jeweiligen Eingriffsflächen angeordnet sind, welche Dichtungs- oder Abdichtmittel ein flexibles oder nachgiebig deformierbares Material oder dergleichen umfassen.

7. Katalysatorträger nach einem der Ansprüche 1 bis 6, worin die Monolithstruktur, der Rahmen, zusätzliche Eingriffsmittel und/oder Dichtungs- oder Abdichtmittel aus einem anorganischen Material mit hoher Temperaturbeständigkeit bestehen, ausgewählt unter Verbindungen von Elementen aus den Gruppen IIa, IIIa, IVa, IIIb, IVb und der Lanthanidengruppe des Periodensystems der Elemente, und aus Kombinationen hievon, vorzugsweise ausgewählt unter Oxiden, Carbiden, Nitriden und dergleichen von Zirkonium, Lanthan, Aluminium und Kombinationen hievon mit beliebigen der zuvor definierten Verbindungen, und worin der Rahmen eine Faserverstärkung aufweist, vorzugsweise eine mit kontinuierlicher anorganischer Faser verstärkte anorganische Matrix, wie zuvor definiert, enthält.

8. Verfahren zur katalytischen Umwandlung eines Fluidsubstrates, umfassend das Inkontaktbringen des Substrats bei erhöhter Gasraumgeschwindigkeit und bei erhöhter Temperatur mit einem Katalysator, der ein katalytisch aktives Metall, aufgebracht auf eine poröse Monolithstruktur, wie zuvor unter Bezugnahme auf einen der Ansprüche 1 bis 7 definiert, umfaßt, wobei die Monolithstruktur dazu angepaßt ist, in dichtenden Eingriff mit einem Rahmen, wie vorstehend unter Bezugnahme auf einen der Ansprüche 1 bis 7 definiert, mittels einer Dichtungskraft zu gelangen, die auf die Monolithstruktur an deren stromaufwärtigem Ende, wie zuvor unter Bezugnahme auf einen der Ansprüche 1 bis 7 definiert, ausgeübt wird, wobei vorzugsweise die Dichtungskraft den Druck der Fluidströmung einschließt.

9. Verfahren nach Anspruch 8, das ein Verfahren zur katalytischen Partialoxidation eines Kohlenwasserstoffeinsatzmaterials ist, das ein Inkontaktbringen eines ein Kohlenwasserstoffeinsatzmaterial und ein Sauerstoffhältiges Gas umfassenden Einsatzgemisches mit einem Katalysator, der auf einen Katalysatorträger, wie vorstehend definiert, aufgebracht ist, bei einer Temperatur im Bereich von 750 bis 1.400°C, stärker bevorzugt 850 bis 1.300°C, und bei einer Gasraumgeschwindigkeit im Bereich von 20.000 bis 100.000.000 Nl/kg/h umfaßt, und worin der Katalysator als katalytisch aktives Material ein unter den Elementen der Gruppe VIII des Periodensystems der Elemente ausgewähltes Metall enthält, vorzugsweise ausgewählt unter Rhodium, Platin, Palladium, Osmium, Iridium und Ruthenium.

10. Verfahren nach Anspruch 9, worin das Kohlenwasserstoffeinsatzmaterial Methan, Erdgas, Begleitgas oder eine Quelle von leichten Kohlenwasserstoffen enthält und das sauerstoffhältige Gas im wesentlichen reiner Sauerstoff ist, wobei vorzugsweise das Kohlenwasserstoffeinsatzmaterial und das sauerstoffhältige Gas in Mengen vorliegen, die ein Sauerstoff/Kohlenstoff-Verhältnis von 0,3 bis 0,8, vorzugsweise von 0,45 bis 0,75 ergeben.

## Revendications

1. Support de catalyseur comprenant un montage comportant une ouverture d'entrée de fluide, une ouverture de sortie de fluide et une surface d'engagement adaptée pour engager une structure monolithique poreuse, et une structure monolithique poreuse comportant une première extrémité amont, une seconde extrémité aval et une surface d'engagement pour engager le montage, et pour réaliser un engagement de scellage sensiblement étanche aux fluides au moyen d'une force de scellage appliquée à la structure monolithique à son extrémité amont, en produisant ainsi une pression excédentaire et sensiblement proportionnelle à une différence de pression entre les extrémités amont et aval de celle-ci, avantageusement la force de scellage comprenant une pression d'écoulement fluide d'un courant de composant(s) réactionnel(s) ou de substrat(s).

2. Support de catalyseur suivant la revendication 1, dans lequel la structure monolithique comprend un cône plein tronqué et le montage comprend un cône à extrémités ouvertes creux tronqué, caractérisé en ce que la structure et le montage sont définis par essentiellement le même demi-angle de cône et par sensiblement la même forme de cône de sorte que le montage est adapté pour engager la structure monolithique de telle sorte que les deux surfaces de cône soient en engagement de scellage, avantageusement la structure monolithique et le montage pouvant comprendre une forme de cône arrondie ou polygonale quelconque ou une combinaison de celles-ci.

3. Support de catalyseur suivant la revendication 2, dans lequel la structure monolithique est définie par un plan de troncature droit, angulaire ou arrondi, avantageusement dans le même plan que l'extrémité amont de celle-ci.

4. Support de catalyseur suivant l'une ou l'autre des revendications 2 et 3, dans lequel la structure monolithique et le montage sont définis par un demi-angle de cône dans l'intervalle de 3° à 20° par rapport à l'axe, avantageusement dans l'intervalle de 4° à 18°, plus avantageusement dans l'intervalle de 5° à 15°, par exemple dans l'intervalle de 6° à 10°.

5. Support de catalyseur suivant l'une quelconque des revendications 1 à 4, comprenant un moyen d'engagement additionnel sous la forme d'un ou plusieurs agencements en relief prévus sur le montage et/ou la structure monolithique.

6. Support de catalyseur suivant l'une quelconque des revendications 1 à 5, comprenant un moyen de scellage ou de garniture agencé pour connecter les surfaces d'engagement respectives, lequel moyen de scellage ou de garniture comprend une matière flexible ou déformable de façon résiliente ou analogue.

7. Support de catalyseur suivant l'une quelconque des revendications 1 à 6, dans lequel l'un quelconque des support monolithique, montage, moyen d'engagement additionnel et moyen de scellage ou garniture comprend une matière inorganique résistante aux températures élevées, choisie parmi les composés d'éléments des Groupes IIa, IIIa, IVa, IIIb, IVb et le groupe des lanthanides du Tableau Périodique des Eléments, et leurs combinaisons, avantageusement choisis parmi les oxydes, carbures, nitrures ou analogues du type zircone, oxyde de lanthane, alumine et leurs combinaisons avec l'un quelconque des composés définis précédemment, et dans lequel le montage comprend un renforcement fibreux, avantageusement comprend une matrice inorganique renforcée de fibres inorganiques continues telle que définie précédemment.

8. Procédé pour la conversion catalytique d'un substrat de fluide comprenant la mise en contact du substrat à une vitesse spatiale horaire gazeuse élevée et à température élevée avec un catalyseur comprenant une matière catalytiquement active supportée sur une structure monolithique poreuse telle que définie précédemment dans l'une quelconque des revendications 1 à 7, dans lequel la structure monolithique est adaptée pour être engagée par scellage d'une manière sensiblement étanche aux fluides par un montage tel que défini précédemment dans l'une quelconque des revendications 1 à 7, au moyen d'une force de scellage appliquée à la structure monolithique à son extrémité amont telle que définie précédemment dans l'une quelconque des revendications 1 à 7, avantageusement la force de scellage comprend une pression d'écoulement fluide.

9. Procédé suivant la revendication 8, qui est un procédé pour l'oxydation partielle catalytique d'une charge d'alimentation hydrocarbonée, lequel comprend la mise en contact d'une alimentation comprenant une charge d'alimentation hydrocarbonée et un gaz contenant de l'oxygène avec un catalyseur fixé sur un support de catalyseur tel que défini précédemment à une température dans l'intervalle de 750 à 1400°C, avantageusement de 850 à 1300°C et à une vitesse spatiale horaire gazeuse allant de 20.000 à 100.000.000 NI/kg/hre, et dans lequel le catalyseur comprend, comme matière catalytiquement active, un métal choisi parmi les éléments du Groupe VIII du Tableau Périodique des Eléments, avantageusement choisi parmi le rhodium, le platine, le palladium, l'osmium, l'iridium et le ruthénium.

10. Procédé suivant la revendication 9, dans lequel la charge d'alimentation hydrocarbonée comprend du méthane, du gaz naturel, un gaz associé ou une source d'hydrocarbure léger et le gaz contenant de l'oxygène est de l'oxygène pratiquement pur, avantageusement dans lequel la charge d'alimentation hydrocarbonée et le gaz contenant de l'oxygène sont présents en des quantités conférant un rapport oxygène à carbone de 0,3 à 0,8, avantageusement de 0,45 à 0,75.
